Europäisches Patentamt

European Patent Office

Office européen des brevets

(11) Publication number: **0 259 244 B1**

# EUROPEAN PATENT SPECIFICATION

(45) Date of publication of patent specification: **23.10.91**

(51) Int. Cl.⁵: **A01D 41/12,** A01D 41/14, A01D 61/00, B65G 15/10

(21) Application number: **87630156.5**

(22) Date of filing: **01.09.87**

(54) Conveyor for a crop harvester.

(30) Priority: **04.09.86 US 903521**

(43) Date of publication of application:
**09.03.88 Bulletin 88/10**

(45) Publication of the grant of the patent:
**23.10.91 Bulletin 91/43**

(84) Designated Contracting States:
**DE FR GB NL**

(56) References cited:
**EP-A- 0 125 719          EP-A- 0 150 629
US-A- 2 400 667          US-A- 3 854 272
US-A- 4 072 062          US-A- 4 553 663**

(73) Proprietor: **THE GOODYEAR TIRE & RUBBER
COMPANY
1144 East Market Street
Akron, Ohio 44316-0001(US)**

(72) Inventor: **Johnson, David Willard
1330 South 190th Street
Bennet Nebraska 68137(US)**

(74) Representative: **Leitz, Paul
Goodyear Technical Center-Luxembourg
Patent-Department
L-7750 Colmar-Berg(LU)**

Rank Xerox (UK) Business Services

## Description

Background of the Invention

This invention generally relates to crop harvesters and, more particularly, to an improved, flexible belt conveyor which may be used for moving cut grain from one level in the combine harvester to a higher level. This invention is particularly useful in a drag coveying apparatus in which the material to be conveyed is trapped between a floor and a multiple conveyor belt assembly to effect the upward transport of the material by dragging it up the incline. This is in contrast to the more common method of conveying where the transported material is carried on the upper portion of the belt. It also is useful in hay balers for the formation, containment and compaction of cut hay into large cylindrical bales.

Drag conveyors as known in the prior art are composed of mechanical chains with metal crossbars traversing the open distance between the chains. These chains are composed of a multiplicity of parts, including plates, pins, brackets and miscellaneous linkage parts. These mechanical chain conveyors suffer from a number of problems due to the many parts involved. These mechanical chains are subject to stretching due to wearing and elongation of the holes through which the link pins or other fastening means are located. Over a relatively short period of operation, the mechanical chain will actually expand in overall length by several inches requiring constant adjusting during harvesting operations to take up the slack created. If one of the metal pieces is broken and becomes entrained with the crop that is being harvested, the dislodged part may seriously damage or cause a lockup of downstream processing mechanisms in the harvester including knife cylinders, high speed fans, etc. A major performance limitation of the mechanical chain configuration of the prior art is that it is limited to low speed operation and is objectionably noisy. In addition, continuous maintenance is required on the prior art chains, the need for lubrication is constant, and metal parts must periodically be replaced. The metallic chains are also very heavy and add to the weight of the harvester.

Flexible belts having lugs on one surface adapted for positive driving by a sprocket and having molded transverse ribs on the upper surface are known for crop gathering use. A pair of belts are positioned to entrap grain stalks between the opposed ribbed surfaces of the belts. Such belts suffer the disadvantage that when a transverse cleat is damaged, or ripped off during harvesting operations, the entire belt must be replaced. Such an occurrence is not unusual when crop residue, rocks or debris become jammed in the conveyor. A belt having the transverse molded ribs covering the complete width of the conveying mechanism in a combine adds considerable weight to the harvester and is very expensive to produce as an endless belt without mechanical splice.

U.S. Patent 4,553,663 issued on November 19, 1985 by the inventor herein describes a crop conveying apparatus that uses flexible rubber belts that have transverse connecting links positioned in cleat bores.

Brief description of the invention

The aim of the invention is to avoid the above drawbacks and to create an improved crop conveying assembly as well as a flexible conveyor belt for a crop harvester. This aim is achieved by the invention as stated in the appended claims. An advantage of this invention is to provide a multiple flexible endless belt conveyor that eliminates the maintenance requirements, damage potential, and excessive weight of prior art conveyors. The present invention susbtantially eliminates moving mechanical parts that can be lost thus avoiding damage to downstream crop processing mechanisms. It further provides quiet operation without need for lubricants. The design provides easy replacement of the belt which may be damaged during operation. Much higher speeds of operation of the conveying mechanism can be attained through use of this invention.

Brief description of the drawings

The features and advantages of the invention will be better understood from a consideration of the following description when taken in conjunction with the accompanying drawings in which :

Fig. 1 is a perspective view of a combine harvester with portions of the housing cut away to expose a feeder house conveyor equipped with the crop conveying assembly of the invention.

Fig. 2 is an isometric view of the crop conveying assembly of Fig. 1, removed from the combine to expose the complete crop conveyor with sprockets and idler.

Fig. 3 is a portion of the longitudinal cross-sectional view of the preferred embodiment of an endless flexible belt as shown in Fig. 2 utilizing longitudinal reinforcement in the cleat.

Detailed Description of the Invention

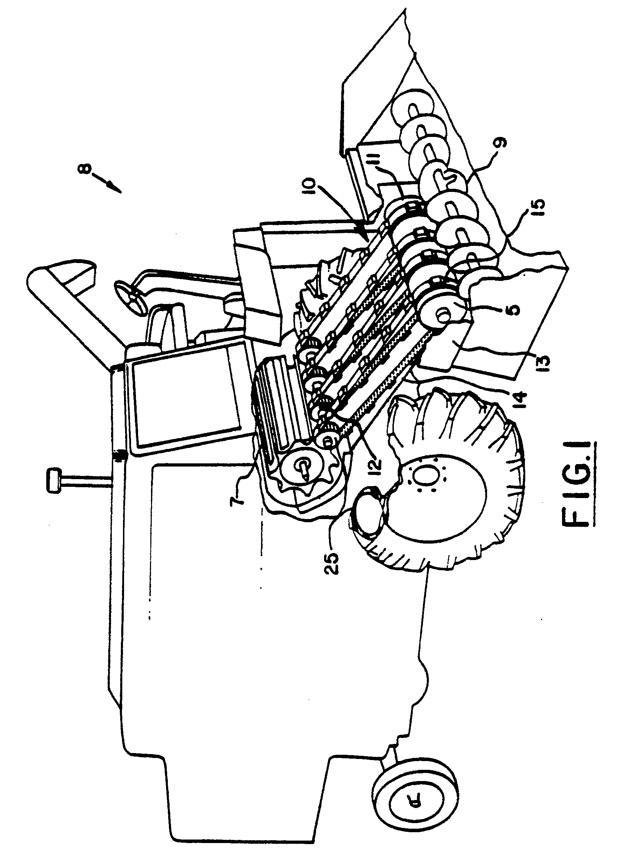

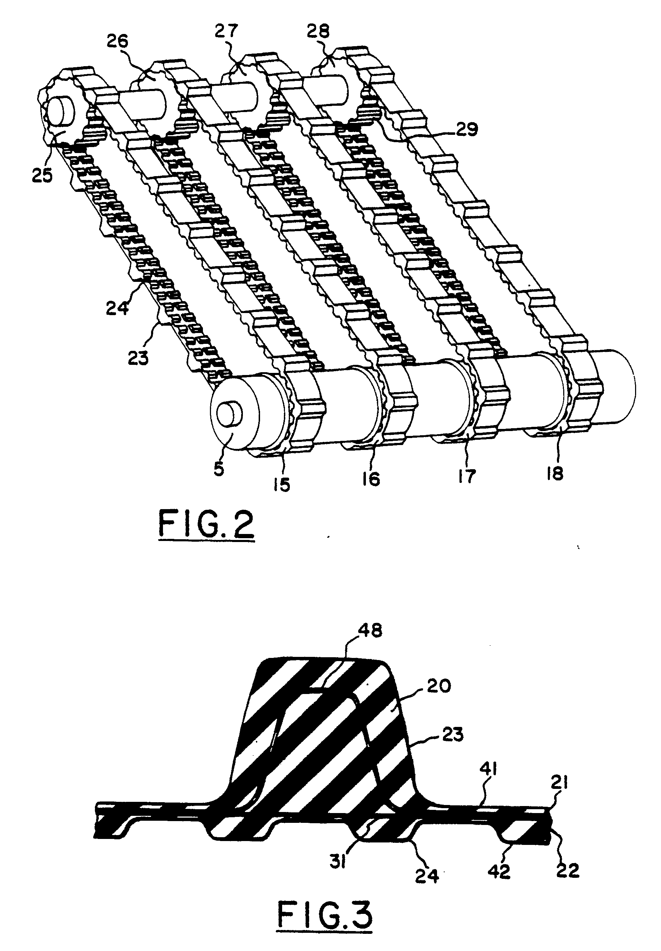

Referring to Fig. 1, a conveyor for a combine harvester 8 is generally indicated by a reference numeral 10. The forward end 11 of the conveyor is positioned toward the crop gathering forward end of the combine 8. An auger 9 may feed the conveyor. The rearward end 12 discharges the crop into an additional processing step in the combine such as a cylinder 7. The harvester conveyor 10 includes a shroud 13 which completely encloses the conveyor during operation. The shroud 13 includes an inclined conveyor bottom surface 14. The conveyor shown in Fig. 1 and Fig. 2 includes four parallel spaced belts 15, 16, 17, 18 and which are rotatably mounted on drive and idler means shown in Fig. 2 as a number of toothed pulleys 25, 26, 27 and 28 and an idler drum 5.

Referring to Fig. 2 the belts 15-18 and the drive and idler means are shown in isolation. The belts 15-18 are identical in construction.

Referring now to Fig. 3, the belts 15-18 are composed of an elastomeric body 20 made from an elastomeric and resilient material suitable for the working environment. The elastomeric body 20 may be a unitary structure or may include a first layer 21 and a second layer 22 which are substantially parallel and composed of the same or different elastomeric and resilient materials. Representative of the elastomeric materials which may be used include thermosetting natural or synthetic rubbers, thermoplastic elastomers and urethanes. The first layer 21 includes integrally molded elastomeric cleats 23 to form the top surface 41. The cleats 23 are spaced regularly around the full longitudinal or circumferential length of the belts 15-18. The second layer 22 forms a positive driving portion of the belts 15-18 and includes a plurality of longitudinally spaced lugs 24, integrally molded to the second layer to form the bottom surface 42. The lugs may have any desired spacing for meshing with a tooth pulley or sprocket. A single row of lugs may be utilized, however, it is preferable that there be two rows of lugs on the second layer spaced transversely apart. The sprockets 25-28 utilized in the crop conveying assembly of Fig. 2 contain lug engaging teeth 29. While Fig. 2 shows two rows of lugs 24 on each belt, it may be desirable to have three or more such rows or a single row of lugs recognizing that the sprocket utilized would be complementary to the lug configuration. Special tough, abrasion resistant elastomers may be utilized for the first layer 21 and/or the second layer 22 to provide extra shear force resistance to the lugs 24 and cleats 23. Oriented fiber reinforced rubber compounds are particularly adapted for meeting these requirements.

Imbedded within the polymeric body 20 or alternatively positioned between the first layer 21 and second layer 22 is a longitudinal load bearing tensile member 31. The tensile member should be substantially inextensible in the range of working tension exerted during use in a crop conveying assembly. The tensile member 31 may be composed of any conventionally used high modulus of elongation material which exhibits elongation in an acceptable range for the tension which is exerted on the belt during operation. Steel wire, fiberglass, or aromatic polyamide are preferred high modulus load bearing members due to their low elongation at high tensile stresses. Other conventional tensile members such as polyester, nylon and rayon may be used for lighter duty applications where the working tension placed on the belt during operation is relatively low. The tensile member may be formed in any conventionally known manner including spiralling one or more strands onto a forming mandrel to form a continuous, endless tensile member. Alternatively, strips of reinforcement having a longitudinally oriented tensile material such as tire cord fabric may also be overlap spliced to form a continuous tensile member, which has sufficient splice strength to remain substantially inextensible at operating tensions.

Additional plies of reinforcing fabric may be positioned over and/or under the load bearing tensile member 31. The reinforcement layers may be formed of any conventional belt fabric such as square-woven, bias fabrics or cords to impart additional longitudinal and transverse strength and to protect the tensile member from damage during service.

The cleats 23, as shown in Fig. 3, are solid. The cleats 23, are the crop engaging portion of the crop conveying assembly. The cleats 23, scrape along the bottom surface or pan to trap the grain in front of the leading edge of the cleat 23, to transport the grain up the inclined surface 14. Height of the cleat, 23, refers to that dimension of the which lies perpendicular to the plane of the belt tensile member. Choice of cleat height should be made to assure sufficient structural strength of the link to withstand the external load stresses during operation of the crop conveying assembly and also to minimize the shearing stresses. The necessity for a lesser or greater height for the cleat is important in a drag conveying assembly as shown in Fig. 1 and Fig. 2 to assure that the cleats, 23, of each belt can scrape along the bottom 14 of the conveyor housing, thus efficiently pulling or dragging the grain up the inclined bottom surface 14.

An optional cleat reinforcement layer 48 is shown extending within the elastomeric cleat body essentially parallel to the top surface 41 of the cleat and extending down to run generally parallel to the load bearing tensile member 31. It follows a generally sinusoidal path essentially parallel to the top surface 41 of the belt. This cleat reinforcement layer 48 is useful in dissipating shear stresses which develop during operation of the crop conveying apparatus. Specially reinforced elastomeric compounds may be utilized in the molding of the cleat portion in order to provide additional resistance to these shear stresses.

Fig. 1 and Fig. 2 illustrate a crop conveying assembly possessing four parallel belts. It should be appreciated that the conveying assembly may possess as few as two belts or more than four as the width of the assembly needs to be increased or decreased.

The belts useful in this invention can be made according to conventional techniques for producing endless belts. A preferred endless belt uses a natural and styrene-butadiene rubber blend for the elastomeric body with a continuously wound, aromatic polyamide filament tensile member. The uncured belt composite is formed then subjected to heat and pressure to complete formation of the cleats and driving lugs and to cure the elastomer. The belts on a combine of Fig. 1 can be easily loosened by slackening the idler drum 5 shown in Fig. 1.

The crop gathering assembly of this invention is free of the operational difficulties associated with a belt assembly wherein a connecting link or a cleat is attached through a punched hole in the belt carcass. Any time a hole is punched through a belt carcass, this attachment point becomes a stress center during operations under tension, and the hole in the belt carcass will inevitably be the failure point. This invention allows for thinner, lighter weight belts, which can be run over small diameter sprockets and idlers at high speed, due to the relatively thin belt carcass required. Prior art assemblies where bolting of the cleat and/or the connecting link may be done through the belt carcass leads to inferior performance when compared to the crop gathering assembly of this invention. Actual field testing of the crop gathering assembly of this invention on a combine harvester demonstrated that conveyor speeds of 800 feet per minute were easily attainable using the rubber belt of this invention. This is in contrast to conventional mechanical chain connecting link configurations where 400 feet per minute is the maximum conveyor speed which may be obtained. Maximum longitudinal stretch may be limited to between 1/2 and 4 percent by use of the preferred very high modulus load bearing tensile members such as an aromatic polyamide, fiberglass, or steel cord. If other conventional tensile members material such as nylon or polyesters is used, stretch may exceed 4 percent. The degree of stretch is also dependent on working tension.

Commercial Applicability

The crop conveying assemblies composed of at least two belts spaced apart offer a greatly improved system for conveying grain within a harvester, or for forming and compacting large cylindrical bales in a hay baler. Each assembly is lightweight, requires no lubrication, has no metal parts, and with proper selection of the load bearing tensile member, exhibits virtually no stretching during crop gathering operations. All these attributes lead to low maintenance, long life, operating economy and quiet conveyor operation. Additionally, the conveyor can be run at greatly increased speeds when compared to the prior art mechanical chain link systems. Further, the weight saving is substantial; a metal chain conveyor for a small combine weighs 200 pounds while the rubber crop conveyor of this invention weighs only 90 pounds.

## Claims

1. A crop conveying assembly comprising: a plurality of side by side, transversely spaced, flexible belts (15-18); each of said belts having an elastomeric body (20) with a top surface (41), a bottom surface (42), a high modulus tensile member (31) disposed within said elastomeric body, a plurality of longitudinally spaced lugs (24) integrally molded to the elastomeric body to form the bottom surface, a plurality of longitudinally spaced raised solid cleats (23) integrally molded to the elastomeric body to form the top surface; and a conveyor bottom surface which traps the crop to be conveyed characterized in that said flexible belts (15-18) are free of transverse connecting links and in that the raised solid cleats (23) are the crop engaging portion of the crop conveying assembly.

2. A crop conveying assembly of claim 1 characterized in that the top surface (41) of each cleat (23) lie in an imaginary plane parallel to the tensile member (31).

3. A crop conveying apparatus as set forth in claim 1 characterized in that said belt (15-18) is an endless type belt having elastomeric body (20) composed of a first layer (21) and a second layer (22) having said tensile member (31) interposed therebetween, said first layer having as its outer peripheral surface the top surface (41) and being composed of a first flexible elastomeric material, said second layer having the bottom surface (42) as its outer surface and being composed of a second flexible elastomeric material.

4. A crop conveying assembly as set forth in claim 1 characterized in that said longitudinally spaced lugs (24) are arranged in a plurality of rows spaced transversely apart across said bottom surface (42) of said belt (15-18).

5. A crop conveying assembly as set forth in claim 1 characterized in that said belt (15-18) contains additional reinforcing layers (48) positioned within said elastomeric body (20).

6. A crop conveying assembly as set forth in claim 5 characterized in that said belt includes a cleat (23) reinforcing layer (48) positioned within said elastomeric body (20) across the full transverse width of the belt following a generally sinusoidal path parallel to the top surface (41) of said belt, such that said cleat reinforcing layer lies below the top surface of the belt.

7. A flexible conveyor for a crop harvester (8) having a longitudinal direction and a transverse direction comprising:
   a) a plurality of side by side, transversely spaced flexible belts (15-18) each belt having an elastomeric body (20), a top surface (41), a bottom surface (42), and a tensile member (31) substantially inextensible in the longitudinal direction embedded in the elastomeric body, a plurality of longitudinally spaced lugs (24) integrally molded to the elastomeric body to form the bottom surface, a plurality of longitudinally spaced apart solid cleats (23) integrally molded to the elastomeric body to form the top surface;
   b) at least one toothed pulley (25-28) positioned to meshingly engage said lugs (24) in said belt characterized in that said flexible belts (15-18) are free of transverse connecting links and in that the raised solid cleats (23) are the crop engaging portion of the crop conveying assembly.

**Revendications**

1. Assemblage de transport de récolte comprenant :
   plusieurs courroies flexibles (15-18) disposées côte à côte et écartées en direction transversale, chacune des courroies comprenant un corps élastomère (20) muni d'une surface supérieure (41), d'une surface inférieure (42), ainsi qu'un organe (31) de résistance à la traction ayant un module élevé et disposé au sein du corps élastomère, plusieurs côtes (24) espacées en direction longitudinale moulées en une seule pièce avec le corps élastomère pour constituer la surface inférieure, plusieurs barrettes pleines surélevées(23) espacées en direction longitudinales et moulées en une seule pièce avec le corps élastomère pour constituer la surface supérieure ; ainsi qu'une surface inférieure de transporteur qui coince la récolte à transporter, **caractérisé en ce que** les courroies flexibles (15-18) sont exemptes d'organes intermédiaires transversaux et **en ce que** les barrettes pleines surélevées (23) constituent la portion de l'assemblage de transport de récolte, qui vient se mettre en contact avec cette dernière.

2. Assemblage de transport de récolte selon la revendication 1, **caractérisé en ce que** la surface supérieure (41) de chaque barrette (23) se trouve dans un plan imaginaire parallèle à l'organe (31) de résistance à la traction.

3. Appareil de transport de récolte selon la revendication 1, **caractérisé en ce que** la courroie (15-18) est une courroie de type sans fin comprenant un corps élastomère (20) qui est constitué par une première couche (21) et par une seconde couche (22), l'organe de résistance à la traction (31) étant intercalé entre elles, la surface périphérique externe de la première couche constituant la surface supérieure (41) et la première couche étant constituée d'un premier matériau élastomère flexible, la surface externe de la seconde couche constituant la surface inférieure (42) et la seconde couche étant constituée d'un second matériau élastomère flexible.

4. Assemblage de transport de récolte selon la revendication 1, **caractérisé en ce que** les côtes (24) espacées en direction longitudinale sont disposées en plusieurs rangées séparées l'une de l'autre en direction transversale sur la surface inférieure (42) des courroies (15-18).

5. Assemblage de transport de récolte selon la revendication 1, **caractérisé en ce que** les courroies (15-18) sont équipées de couches supplémentaires de renforcement (48) positionnées au sein du corps élastomère (20).

6. Assemblage de transport de récolte selon la revendication 5, **caractérisé en ce que** la courroie comprend une couche (48) de renforcement de barrette (23) positionnée au sein du corps élastomère (20) sur toute la largeur transversale de la courroie en suivant une voie généralement sinusoïdale parallèle à la surface supérieure (41) de la courroie, la couche de renforcement de barrette étant disposée en dessous de la surface supérieure de la courroie.

7. Transporteur flexible destiné à une moissonneuse (8) muni d'un sens longitudinal et d'un sens transversal, comprenant :

a) plusieurs courroies flexibles (15-18) disposées côte à côte et écartées en direction transversale, chacune des courroies comprenant un corps élastomère (20), une surface supérieure (41), une surface inférieure (42), ainsi qu'un organe (31) de résistance à la traction essentiellement inextensible dans le sens longitudinal enrobé dans le corps élastomère, plusieurs côtes (24) espacées en direction longitudinale et moulées en une seule pièce avec le corps élastomère pour constituer la surface inférieure, plusieurs barrettes pleines (23) espacées en direction longitudinales et moulées en une seule pièce avec le corps élastomère pour constituer la surface supérieure ;

b) au moins une poulie dentée (25, 28) positionnée pour venir s'engrener en conformité avec les côtes (24) disposées sur la courroie, **caractérisé en ce que** les courroies flexibles (15-18) sont exemptes d'organes intermédiaires transversaux et **en ce que** les barrettes pleines surélevées (23) constituent la portion de l'assemblage de transport de récolte, qui vient se mettre en contact avec cette dernière.

**Patentansprüche**

1. Förderanordnung für Erntegut mit:
einer Mehrzahl von Seite an Seite quer beabstandet angeordneten flexiblen Bändern (15-18); wobei jedes der Bänder einen elastomeren Körper (20) mit einer Oberseite (41), einer Unterseite (42), ein Hochmodul-Zugelement (31), das in dem elastomeren Körper angeordnet ist, aufweist,
einer Vielzahl von in Längsrichtung beabstandeten Stegen bzw. Rippen (24) die an dem elastomeren Körper integral angeformt sind um die Unterseite zu bilden,
einer Vielzahl von in Längsrichtung beabstandeten erhöhten massiven Stollen (23) die an dem elastomeren Körper integral angeformt sind um die Oberseite zu bilden; und einer Förderer-Bodenfläche, die das zu fördernde Erntegut auffängt
dadurch **gekennzeichnet, daß**
die flexiblen Bänder (15-18) frei von Quer-Verbindungsgliedern sind und daß die erhöhten massiven Stollen (23) den mit dem Erntegut in Eingriff tretenden Abschnitt der Erntegut-Förderanordnung bilden.

2. Förderanordnung für Erntegut nach Anspruch 1, dadurch **gekennzeichnet, daß** die Oberseite (41) jedes Stollens (23) in einer imaginären Ebene parallel zu dem Zugelement (31) liegt.

3. Erntegut-Fördervorrichtung nach Anspruch 1, dadurch **gekennzeichnet, daß** das Band (15-18) ein endloses Band ist mit einem elastomeren Körper (20), der aus einer ersten Lage (21) und einer zweiten Lage (22), zwischen denen das Zugelement (31) angeordnet ist, zusammengesetzt ist, daß die erste Lage als äußere Umfangsfläche die Oberseite (41) aufweist und aus einem ersten flexiblen elastomeren Material besteht, und daß die zweite Lage als äußere Fläche die Unterseite (42) aufweist und aus einem zweiten flexiblen elastomeren Material besteht.

4. Förderanordnung für Erntegut nach Anspruch 1, dadurch **gekennzeichnet, daß** die in Längsrichtung beabstandeten Rippen (24) in einer Mehrzahl von Reihen angeordnet sind, die in Querrichtung über die Unterseite (42) des Bandes (15-18) beabstandet sind.

5. Förderanordnung für Erntegut nach Anspruch 1, dadurch **gekennzeichnet, daß** das Band (15-18) zusätzliche Verstärkungslagen (48) aufweist, die innerhalb des elastomeren Körpers (20) angeordnet sind.

6. Förderanordnung für Erntegut nach Anspruch 5, dadurch **gekennzeichnet, daß** das Band eine die Stollen (23) verstärkende Lage (48) aufweist, die innerhalb des elastomeren Körpers (20) über die gesamte Querbreite des Bandes angeordnet ist und einem im wesentlichen sinusförmigen Weg parallel zur Oberseite (41) des Bandes folgt, derart, daß die Stollen verstärkende Lage unterhalb der Oberseite des Bandes liegt.

7. Flexibler Förderer für einen Mähdrescher (8) mit einer Längs- und Querrichtung, welcher umfaßt:

a) eine Mehrzahl von Seite an Seite in Querrichtung beabstandeten flexiblen Bändern (15-18), wobei jedes Band einen elastomeren Körper (20), eine Oberseite (41), eine Unterseite (42) und ein Zugelement (31), welches in Längsrichtung im wesentlichen nicht dehnbar ist und in dem elastomeren Körper eingelassen ist, aufweist, eine Vielzahl von in Längsrichtung beabstandeten Rippen (24) die an dem elastomeren Körper integral angeformt sind um die Unterseite zu bilden, eine Vielzahl von in Längsrichtung beabstandeten massiven Stollen (23), die an dem elastomeren Körper integral angeformt sind um die Oberseite zu bilden;
b) wenigstens eine gezahnte Riemenscheibe (25-28), die so angeordnet ist, daß sie mit den Rippen (24) in dem Band kämmend ineinandergreift,
dadurch **gekennzeichnet,** daß
die flexiblen Bänder (15-18) frei von Querverbindungsgliedern sind und daß die erhöhten massiven Stollen (23) den mit dem Erntegut in Eingriff tretenden Abschnitt der Erntegut-Förderanordnung bilden.

FIG.1

EP 0 259 244 B1

EP 0 259 244 B1

FIG.2

FIG.3